# EUROPEAN PATENT SPECIFICATION

(11) **EP 0 626 132 B1**
(45) Date of publication and mention of the grant of the patent: **06.12.1995**
(21) Application number: 94201501.7
(22) Date of filing: 26.05.1994
(51) Int. Cl.: A01K 1/06

(54) **Self-closing feeding rack**
Futtergitter
Cornadis

(30) Priority: 26.05.1993 NL 9300896
(43) Date of publication of application: 30.11.1994
(73) Proprietor: L.S. Brouwers Stalinrichtingen B.V., NL-8912 AC Leeuwarden (NL)
(72) Inventor: Sikkema, Lieuwe, NL-8912 AC Leeuwarden (NL)
(74) Representative: Smulders, Theodorus A.H.J., Ir.

(56) References cited:
- EP-A- 0 322 023
- DE-A- 4 017 394
- NL-B- 183 796
- US-A- 3 863 604
- US-A- 4 457 265
- DE BOER STALINRICHTINGEN 'ZELFSLUITEND VOERHEK type ' , DE BOER B.V. , LEEUWARDEN (NL) , XP319772

## Description

The invention relates to a self-closing feeding rack for cattle, comprising a top girder substantially horizontal in the service position, a bottom girder extending parallel to the top girder, and a plurality of fixed uprights connecting the top and bottom girders with each other, there being further provided a plurality of catch uprights adapted for pivotal motion between an open position and a catch position, which, together with a fixed upright, each form an eating opening, as well as locking means for the catch uprights and operating means for the locking means, the operating means comprising a slidable operating section, the locking means being attached to one of the girders, which girder is designed as a hollow section girder provided with at least one longitudinal slot via which the ends of the catch uprights proximal to the relevant section girder extend into the section girder for cooperation with the locking means. Such a feeding rack is disclosed in Dutch patent 183796.

In the known feeding rack, the top girder includes an operating strip extending throughout the length of the top girder, this operating strip being slidable in longitudinal direction at least along the inside of one of the sidewalls of the top girder. At the location of each catch upright, the operating strip comprises a lift cam and a slide-off cam spaced therefrom. Through sliding displacement of the operating strip, at each catch upright the position of a pawl arranged around the top end of the catch upright can be changed, in such a manner that the catch uprights can be locked, cocked or released. Each pawl is provided with a cam projecting under the top girder, serving to release each catch upright separately.

During assembly of the known feeding rack, the pawls and operating strip are slid into the top girder, whereafter the catch uprights should be properly inserted in the respective pawls from below through openings in the underside of the top girder. For repairing or servicing for instance the pawls or the operating strip, the operating strip should be slid out of the top girder in the longitudinal direction. However, the required room for this is not always present.

Moreover, an animal could get injured through the projecting cam or catch its collar or ear mark on such a cam. It might also happen that an animal that is locked in the eating opening releases a blocked catch upright by means of the cam.

German Offenlegungsschrift 4017394 discloses a self-closing feeding rack of the type described above wherein further the locking means comprise a plurality of locking elements pivotally connected to the hollow section girder and extending at least partly outside the hollow section girder. In this known feeding rack, however, parts of the locking means extend outside the operating section. Also, in one of the embodiments, the catch uprights are provided with a hook engaging laterally around the operating section. In this known feeding rack, therefore, the locking means are not inaccessible to the cattle. Also, the cattle may be injured through projecting parts and/or catch their collar or an ear mark, for instance, on such projecting parts and thereby be liable to injury.

The object of the invention is to provide a feeding rack of the above-described type, wherein the above disadvantages are at least partly avoided. More generally, the object of the invention is to provide an effective, reliable and robust feeding rack.

To that end, a feeding rack according to the invention is characterized in that each locking element extends at least partly outside the hollow section girder on a side of the hollow section girder that is not proximal to the eating opening, and that the operating section is a hollow section that encloses the parts of the locking elements that extend outside the hollow section girder, in such a manner that the locking means are inaccessible to the cattle.

Because the operating section extends on the outside of the hollow section and encloses the locking means, it can be simply constructed so as to be separately removable in transverse direction and the locking means, for instance, can be individually fitted, removed, and repaired, without the catch uprights having to be removed for that purpose. Only the operating section needs to be removed to gain access to a locking element.

To clarify the invention, some exemplary embodiments of a self-closing feeding rack according to the invention will now be further described with reference to the accompanying drawings.
Fig. 1 schematically shows an example of a feeding rack according to the invention in front elevation;
Fig. 2 schematically shows the upper part of the feeding rack according to Fig. 1 in more detail, the top girder being shown in longitudinal section;
Fig. 3 shows the feeding rack of Fig. 1 in cross section taken on the line III-III of Fig. 1;
Figs. 4A and 4B schematically show two embodiments of a carrier member for use in a feeding rack according to the invention;
Fig. 5 schematically shows a part of a feeding rack comprising a carrier member according to Fig. 4B;
Fig. 6 schematically shows, in perspective and top plan view respectively, a slidable cam element for use in a feeding rack according to the invention;
Fig. 7 schematically shows a variant of a detail of a feeding rack according to the invention;
Fig. 8 schematically shows in side elevation, partly in cross section, an example of an alternative embodiment of a feeding rack according to the invention;
Fig. 9 shows the feeding rack of Fig. 8 in top plan view; and
Figs. 10 and 11 are similar views to Figs. 8 and 9, of a second example of an alternative embodiment of a feeding rack according to the invention.

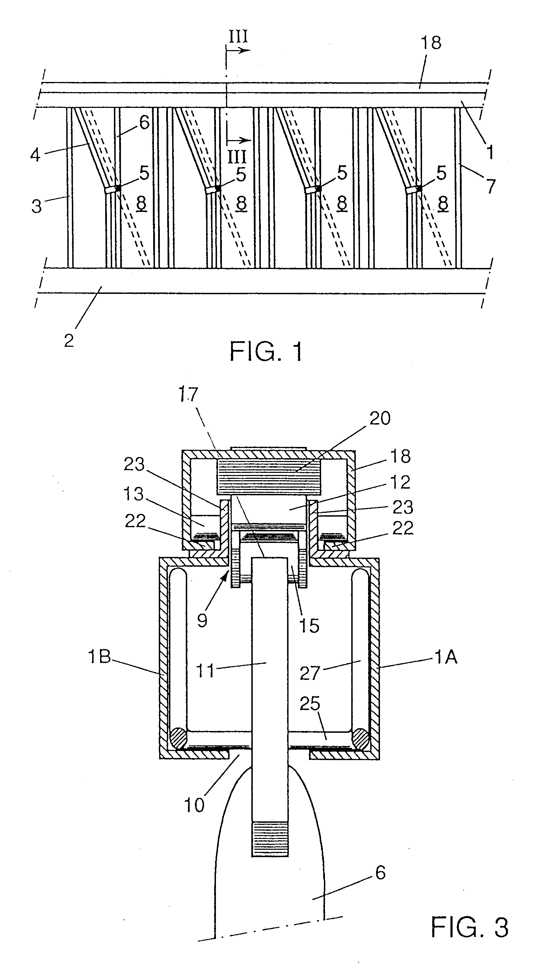

The feeding rack shown in Fig. 1 comprises in the service position a horizontal top girder 1 and a bottom girder 2 parallel thereto. Mounted, for instance through welding, between the top girder 1 and the bottom girder 2 are a first number of fixed vertical uprights 3 and a second number of fixed, bent uprights 4, the upper end of a fixed vertical upright 3 being located in each case near the upper end of an adjacent bent upright 4. Arranged along each bent upright 4, on the side thereof remote from the fixed vertical upright 3, is a substantially straight catch upright 6 pivotally mounted in a pivoting point 5 arranged at the level of the bending point of the bent upright. Spaced from each catch upright 6 is a vertical upright 7, each catch upright 6 together with the adjacent upright 7 bounding an eating opening 8. The bottom girder 2 is formed by a closed tube to which the fixed uprights 3, 4 have been affixed, for instance by welding or in any other suitable manner.

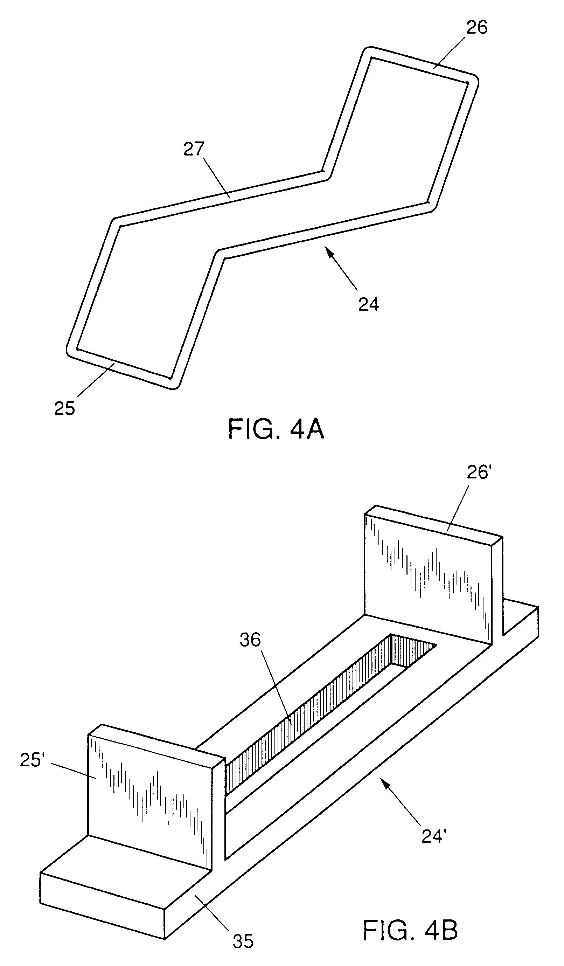

In Fig. 3 it can be seen that the top girder may advantageously be built up from two U-shaped sections or C-sections 1A and 1B, as viewed in cross section, which U-sections are mounted with their open sides facing each other, in such a manner that an upper slot 9 and a lower slot 10 are defined between the U-sections. Each catch upright 6 has its upper end 11 extending through the lower slot 10, this upper end being in principle accommodated between the U-sections so as to be moveable in the longitudinal direction of the feeding rack.

In the example shown, the pivoting motion of the catch upright 6 is bounded on one side in that the part of the catch upright 6 below the pivoting point 5 eventually abuts against the vertical part of the bent fixed upright 4 below the pivoting point 5, or against any other suitable stop. Then the catch upright is approximately vertical, i.e. in the catch position, indicated in Fig. 1 by solid lines. The pivotal motion is bounded on the other side in that the part of the catch upright 6 above the pivoting point 5 abuts against the slanting part of the bent fixed upright above the pivoting point 5, or against any other suitable stop. Then the catch upright is in the open position, indicated in Fig. 1 by broken lines.

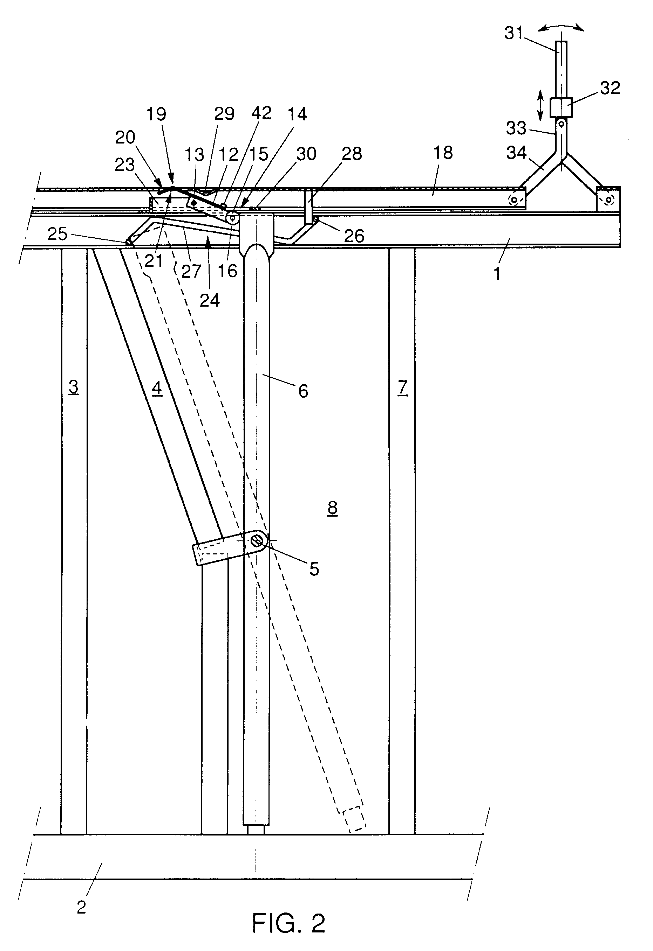

As can be seen in Figs. 2 and 3, above the top girder 1, adjacent each eating opening, a locking arm 12 is mounted for pivoting motion on a pivot 13. In this example the pivot 13 is bearing-mounted in vertical flanges 23 arranged on opposite sides of the slot 9 and extends in transverse direction outside the vertical flanges 23. The locking arm 12 is movable, by hand or by means to be described hereinafter, into a first, substantially horizontal position where the locking arm 12 extends above the top girder 1 and into a second, inclined position, where one end of the locking arm 12 extends through the upper slot 9. In that position, the locking end 14 of the locking arm 12, which is remote from the bent fixed upright 4, is located between the U-sections. The locking arm 12 is so formed and positioned that in the first position the catch upright 6 can be freely pivoted from the open position to the catch position vice versa, without the upper end 11 thereof coming into contact with the locking arm 12, whereas in the second position the locking end 14 comes into contact or can be brought into contact with the side of the upper end 11 of the catch upright 6 proximal to the bent upright 4, if the catch upright is in the catch position.

If a locking arm 12 is in the first position, the associated catch upright 6 can pivot into the inclined open position under the influence of gravity, so that the relevant eating opening is cleared to a maximum extent. When an animal then reaches its head downwards through the eating opening 8, the catch upright 6, it is true, will be pressed into the vertical catch position, but can be pushed back to the open position again when the animal raises its head again, so that the animal can walk away during and after eating from the eating opening. However, when the locking arm is in the second position, the catch upright 6, when being pushed to the vertical position by the animal in the above-described manner, will press the locking end 14 upwards, so that the upper end of the catch upright 6 can pass the locking arm, whereafter the locking arm 12 can fall back again. The catch upright is then locked, so that the animal is locked by its neck between the catch upright 6 and the adjacent displaceable upright 7 and can no longer retract its head.

In the example shown, at the locking end 14, each locking arm 12 is provided with a rotatable roller 15 adapted to roll over the upper end 11 of the catch upright 6 placed in the catch position or to be brought into the catch position as the locking arm 12 is being pivoted from the first position to the second position vice versa. The axis of rotation 16 of the roller 15 is lower than the pivot axis 13 of the locking arm and lower than the end face 17 of a catch upright locked in the catch position, so that in the case where a force is being exerted on the catch upright 6 in the direction of the bent upright 4, the locking end 14 of the locking arm is pressed downwards, i.e. further into the locking position.

The roller facilitates unlocking under load. The roller can further serve as a counterweight which can invariably bring the locking arm into a predetermined rest position. The roller can be made of metal, but also of plastic, or of metal with a plastic coating. Instead of a roller, a sector of a roller or a small lever or the like hinging in one direction can be used. Further, the locking arms preferably comprise, between the locking end 14 and the pivot 13, one or more lateral projections, as indicated by way of example at 42 in Fig. 2, which limit the downward stroke of the locking end. In the position shown and in the example shown, the projections rest on flanges of the operating section to be described hereinafter.

Extending along the top of the top girder 1 throughout the length of the feeding rack is an operating section 18 of inverted U-shape or C-shape in cross section, with the open side facing the slot 9, the operating section 18 substantially enclosing the locking arms 12 and covering the top of the top girder 1. In any case the operating section disallows accidental actuation or actuation by the cattle.

The operating section 18 is provided, in the top surface thereof, with a plurality of openings 21 corresponding in number with the number of catch uprights 6 and spaced apart such that in the closed position of the operating section 18 an operating part 19 of each locking arm 12, remote from the locking end 14, is located just under the opening or even extends upwards through the plane of the opening 21 in the second position of the locking arms. The free end 20 of each locking arm 12 is bent, a bend area being thereby formed, such that the end edge is located under the plane of the opening 21 and the bend area is located just under, or in, or just above the plane of the opening 21.

The longitudinal edges of the operating section 18 proximal to the top surface of the top girder 1 form inwardly bent flanges 22, the flanges 23 being accommodated between the flanges 22 with a proper fit (Fig. 3). The flanges 22 are accommodated between the top surface of the top girder 1 and the parts of the pivots 13 projecting outside the flanges 23. The end faces of the pivots 13 extend into the vicinity of the inside of the operating section. The operating section can therefore be slid in longitudinal direction along the feeding rack over an operating path, without vertical displacements or displacements transverse to the feeding rack being possible. Moreover, the operating section prevents the pivots 13 from shifting.

The ends of the pivots can, if so desired, be provided with caps or sleeves, which may for instance be made of plastic and which can serve as replaceable wear elements and/or sound-deadening elements.

The flanged longitudinal edges 22 of the operating section 18 can, in one exemplary embodiment, be provided with pairs of opposite recesses 30, provided in such a manner that the operating section can be moved into a (de)mounting position, with the recesses being located under the respective pivots 13 and, if applicable, the projections 42 of the locking arms. The operating section can in this position be simply removed and mounted in vertical direction.

Arranged between the U-shaped sections 1A, 1B, at the upper end 11 of each catch tube 6, is a carrier member 24, bent from wire in the example shown in Fig. 2 and in Fig. 4A. In this example the carrier member is approximately Z-shaped and has an end stop 25 and 26, respectively, on opposite sides of the upper end 11 of the upright, as viewed in the longitudinal direction, these end stops extending through substantially the entire width and height between the vertical insides of the U-sections and being interconnected at the respective ends by connecting parts 27 extending along the inside of each U-section (Fig. 2). The free edge of the end stop 25 located on the side of the bent upright then rests on the inside of the bottom face of the top girder 1 and the end stop 26 located on the other side of the catch upright 6 then extends into the vicinity of or against the inside of the top face of the top girder 1. As a consequence, it is substantially impossible for the end stops 25 and 26 to move in the longitudinal direction of the feeding rack in any manner other than jointly. The upper end 11 of the catch tube 6 cannot be moved away from between the stops 25, 26.

The operating section 18 is provided, on the inside thereof on the side of each opening 21 remote from the fixed vertical upright 3 and spaced therefrom, with a carrier cam 28 which extends through the slot 9 and whose free end is located between the end stop 26 and the upper end 11 of the associated catch upright 6. Further, inside of the operating section 18, on the side of each opening 21 remote from the fixed vertical upright 3, a downwardly extending cam element 29 is provided, the cam faces thereof extending in the longitudinal direction of the feeding rack. Each cam may be formed advantageously by a V-shaped recess formed in the top surface of the operating section 18.

The feeding rack further comprises an operating lever 31 with which the operating section can be moved along the feeding rack. Arranged around the operating lever 31 in this example is a sleeve 32 mounted for sliding motion along lever 31. This sleeve 31 can either be slid around a portion 33, extending along the arm 31, of a second lever 34 pivotally coupled to the lever 31, or leave it clear. Only in the latter case can the operating lever be pivoted, so that the operating section can be operated by way of the second lever pivotally connected thereto.

Operating levers of a different design are of course also possible.

The feeding rack can be assembled as follows.

The top girder 1 and the lower girder 2 are connected to each other by means of the uprights 3 and 4. Then the carrier members 24 are fitted in the top girder 1. From above the top girder 1, one locking arm 12 at a time is placed between the flanges 23, whereafter from one side a pivot 13 can be inserted through bores in the flanges 23 and the locking arm. Then the operating section 18 can be placed from above onto the top girder, the recesses 30 enabling the pivots 13 to be passed, and the flanged longitudinal edges 22 ending up on the top surface of the top girder 1 and next to the flanges 23. Free assembling space in the prolongation of the feeding rack is hardly necessary, if at all. It is important to ensure that the upper stops 26 of the carrier members 24 are located in the proper position relative to the carrier cams 28. After the operating section 18 has been placed on the top girder 1, the operating section 18 can be slid along the top girder 1, the flanged longitudinal edges 22 being accommodated in the space between the pivots 13 and the top surface of the top girder 1. The pivots 13 are thereby locked in axial direction by the operating section 18, so that no special measures are required for the attachment of the pivots 13 and it is particularly simple to mount and demount them. The catch uprights 6 can be inserted from below through the lower slot 10 into the top girder and into the carrier members, and be secured in the pivoting points 5.

Complete or partial disassembly of the feeding rack can be effected by carrying out at least a number of the above steps in reverse order.

The feeding rack can be used as follows.

The locking arms can be operated both separately by hand and jointly by the operating section.

In the case of manual operation, an operating part 19 of a locking arm 12 can be pressed downwards through the opening 21. The roller 15 then moves upwards so that the head of a catch upright 6 previously locked in the catch position is released and the catch upright can be moved into the open position, without the position of the other catch uprights 6 being influenced. Further, a catch upright can be pressed by an animal or a human from the open position into a vertical position, independently of the position of the relevant locking arm 12. If necessary, the head 11 of the catch upright temporarily pushes the locking arm upwards in order to pass it.

Operation of the locking arms by means of the operating section 18 is possible by sliding the operating section along the feeding rack. By sliding the sleeve 32 along the operating lever 31 the operating lever is released, whereafter the operating section 18 can be moved along the feeding rack using the operating lever 31.

On the one hand, the operating section can be slid into an open position (to the left in Fig. 2), whereby the locking arms 12 are moved into the first position in that at each opening 21 in the operating section a longitudinal edge is slid over the operating part 19 of the relevant locking arm 12 and pushes the operating part downwards to some extent. Then the operating part is pushed further downwards by the cam element 29, so that the locking end 14 is moved out of the path of the catch upright. On the other hand, the operating section 18 can be moved into the closed position shown in Fig. 3, where the locking arms 12 fall into the second position, so that the catch uprights 6, already in vertical position, are locked, and the inclined catch uprights 6 can be secured in the vertical position by an animal or by a human.

By moving the operating section 18 in one direction (to the right in Fig. 2) further along the feeding rack beyond the closed position, the carrier member 24 can be carried by the carrier cam 28. A catch upright 6 which is still in the open position is then brought into the vertical position by the lower stop 25 of the carrier member. After the catch uprights have been brought into the vertical position, they can be locked by moving the operating section to the left again. By moving the operating section 18 still further in the other direction (to the left in Fig. 2) beyond the open position, the catch uprights 6, already cleared by the locking arms but still disposed in the vertical position, are tapped by the carrier cam 28, so that they fall back under the locking arms into the inclined position, so that the eating openings 8 are cleared. Through the catch uprights 6 falling back, the different carrier parts are carried along in the direction of the fixed uprights.

Fig. 4A is a perspective view of the wire-designed embodiment of a carrier member 24 also shown in Fig. 2, and Fig. 4B is a schematic view of an example of an alternative embodiment of a carrier member 24', which is preferably made of a suitable plastic, but may also be made of a different suitable material. The stops 25' and 26' are formed by ribs extending in vertical direction, connected at the lower end by a base plate 35. The base plate is provided with a central slot 36 extending between the stops, the slot 36 being adapted to accommodate the squeezed top end 11 of a catch upright 6 for movement in longitudinal direction with minor play in transverse direction. The width of the central slot 36 is slightly smaller than the width of the lower slot 10 between the U-sections. This ensures that the upper end of each catch upright 6 can be moved in the top girder relatively noiselessly since the catch upright no longer comes into contact with the metal top girder.

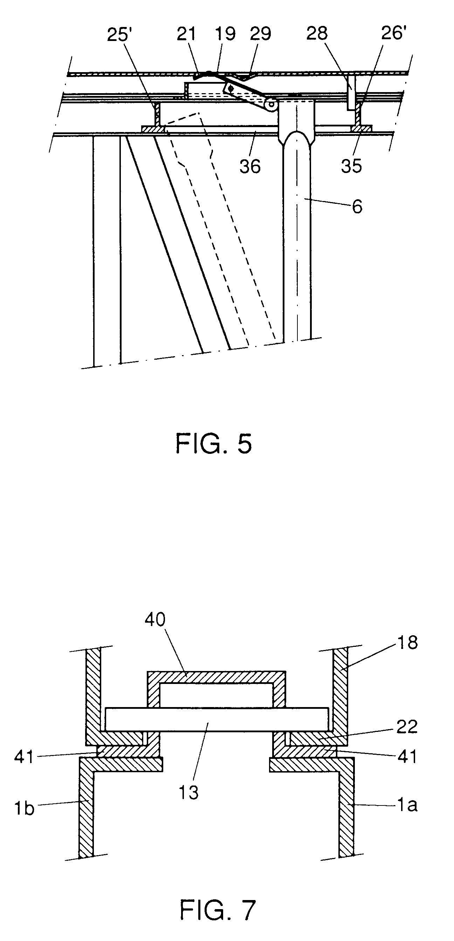

For the sake of completeness, Fig. 5 shows diagrammatically a part of a feeding rack according to the invention where the carrier member 24' shown in Fig. 4B is utilized. It is observed that the sound production of the reciprocating catch uprights could also be limited by providing the heads of the catch uprights with plastic sleeves or making them entirely of plastic. The use of a carrier member 24', however, leads to less wear.

Other possibilities of limiting the sound production include, for instance, the above-mentioned use of plastic caps on the ends of the pivots and/or the use of plastic blocks or strips between the flanges 22 of the operating section and the surfaces of the top girder and/or the flanges 23 cooperating therewith.

Further, the cam elements 29 and/or the operating part 19 and/or the carrier member 24 of Fig. 4A could be provided with a plastic coating.

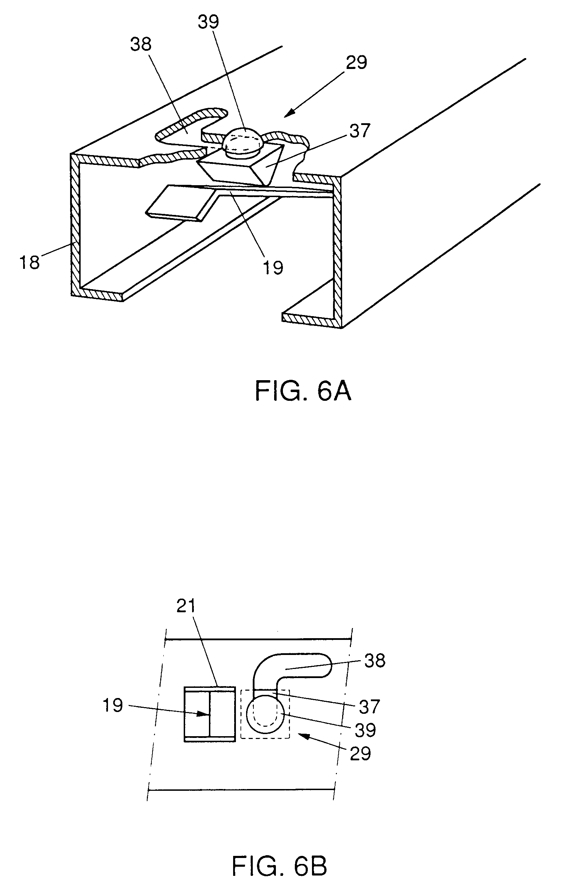

Fig. 6 diagrammatically shows a perspective view (A) and a top plan view (B) of an alternative embodiment of the cam elements 29 arranged within the operating section adjacent the longitudinal edge of each opening. The cam element shown comprises a cam 37 movable in a slot which is L-shaped in this example. In a first extreme position the cam 37 can be brought into contact with the operating part 19 of the locking arm through sliding displacement of the section 18 and in a second extreme position it cannot. The L-shaped slot is provided in the top wall of the operating section and the cam element is held by an attachment member 39 extending through the slot, such as for instance a round head bolt. By placing the cam 37 in the second extreme position, the adjacent locking arm can only be pushed downwards a little by the edge of the opening 21 in the operating section 18, so that the catch upright 6 locked by the relevant locking arm 12 is not released if the operating section 18 is brought into the open position. In this way it is possible in a simple manner to keep particular eating openings 8 closed or to keep an animal locked in a particular eating opening 8 in which it has been locked, while the other catch uprights can yet be released by the central operating lever 31.

Within the scope of the invention, various other embodiments of the feeding rack are possible. Thus, the feeding rack according to the invention can for instance be designed with an operating section arranged beside the top girder or arranged beside or under the bottom girder, the bottom girder being designed analogously to the above-described top girder, and different types of fixed uprights and catch uprights can be used. Further, for instance at least one of the U-sections can be removably connected to the upper end of a number of fixed uprights and/or the other U-section, which enables simple replacement of individual carrier members after removal of the detachable U-section without necessitating the removal of other carrier members.

Further, it is not necessary for the locking arms to have the operating arm actually extend through the openings 21. In principle it will suffice if the operating arms can be pressed down via the openings 21 with the fingers or, upon sliding displacement of the operating section 18, can be operated by the cam elements 29.

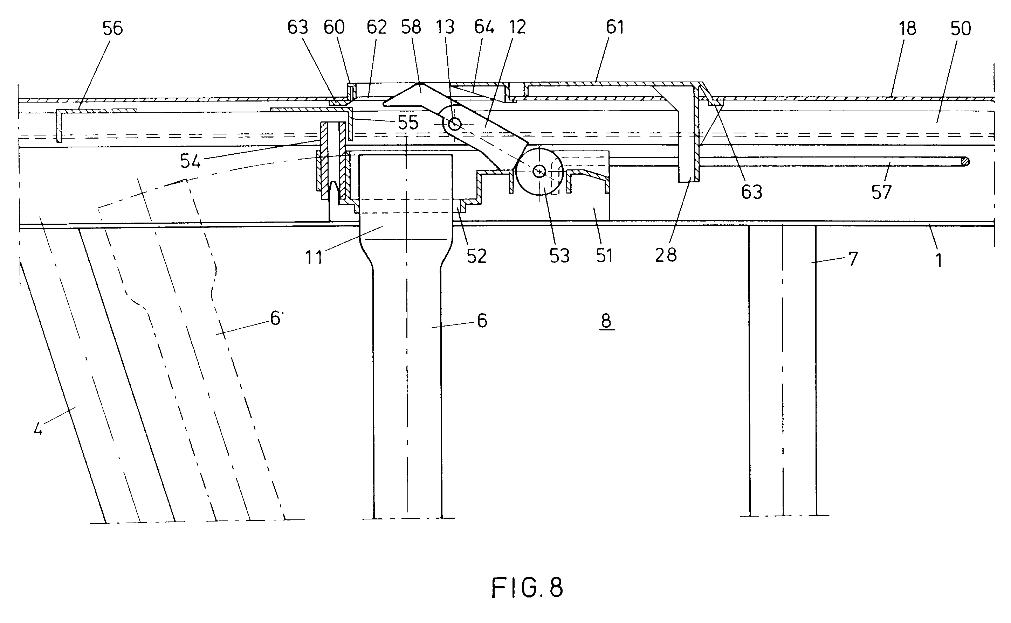

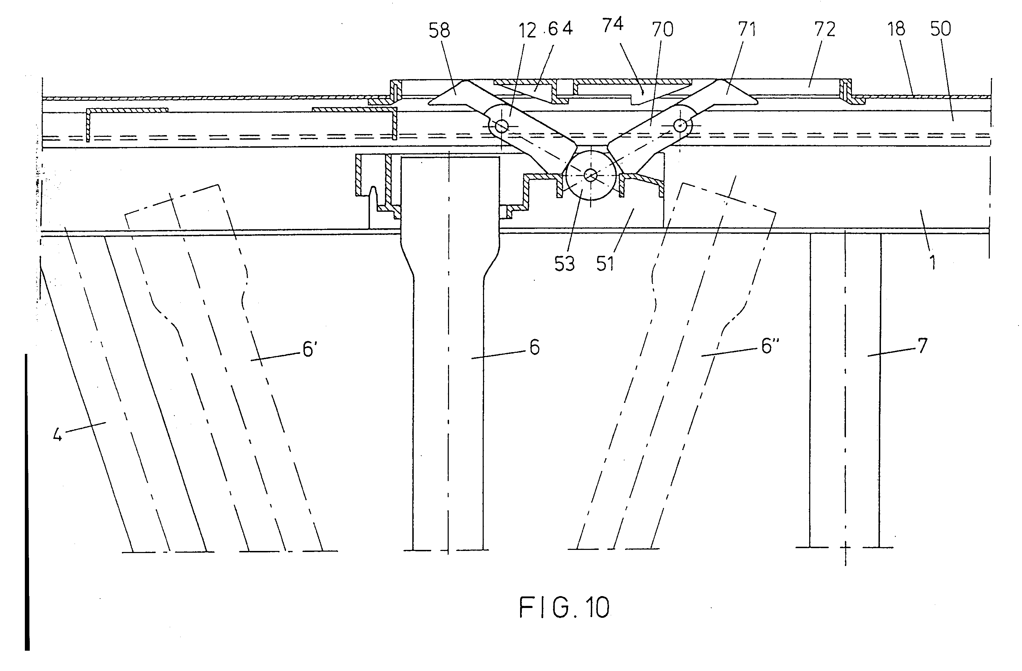

The pivots 13 are accommodated in bores in flanges 23. The flanges 23 may extend throughout the length of the top girder and then optionally form part of the hollow section. However, the flanges 23 may also be present only at the location of the separate locking arms, as shown. Further, instead of flanges 23, ears can be used or inverted U-shaped bearing blocks 40 (Fig. 7), which may optionally be made of plastic and which are mounted over the gap between the U-sections, for instance by means of screws or the like. Such bearing blocks could have small feet 41 resting on the U-sections and at the same time supporting the flanges 22 of the operating section.

Figs. 8,9 and 10,11 show, by way of example, in side elevation, partly in cross section, and in top plan view, two alternative embodiments of a self-closing feeding rack according to the invention.

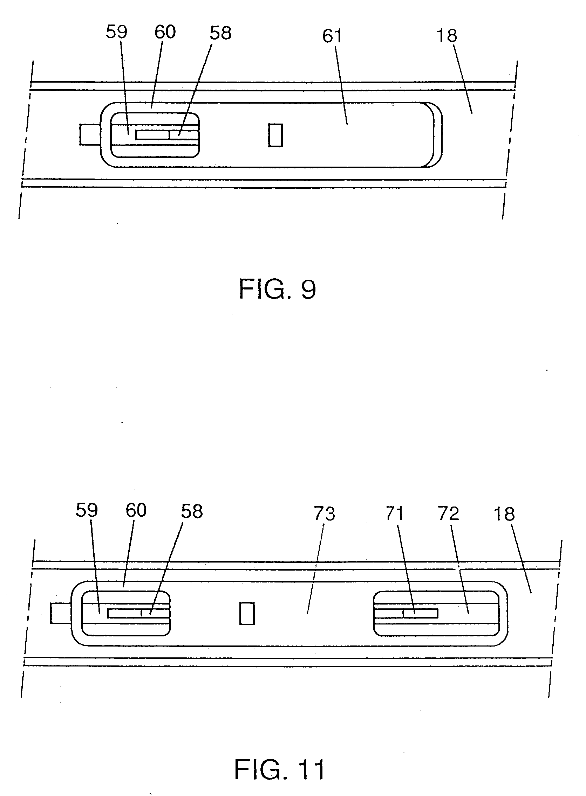

Figs. 8 and 9 again show a bent fixed upright 4, a straight fixed upright 7 and a catch upright 6 in the catch position and in the open position indicated by 6'. In this example, the top girder 1 is built up from two opposite C-sections comprising, at the top thereof, upright flanges 50 which broadly correspond with the flanges 23 of Fig. 3, though in this example they are integral with the C-sections and extend throughout the length thereof. The operating section is arranged over the flanges 50 again.

The head 11 of the catch upright 6 now comprises a sliding block 51, arranged in the top girder, which is preferably made of plastic and which moves in the top girder in correspondence with the movements of the catch upright. A plastic sliding block has a sound-deadening effect. The sliding block 51 is provided with an opening in which or through which extends the head 11 of the catch upright. On the side remote from the bent upright 4, the sliding block is provided with a cam which cooperates with the locking arm 12. In the example shown, the cam is designed as a roller 53 bearing-mounted in the sliding block, the roller 53 in fact having the same function as the roller 15 of Fig. 2. The locking arm 12 then need not be provided with a roller anymore.

The sliding block in this example is provided, on the side proximal to the bent upright 4, with a preferably plastic or rubber buffer 54. The buffer 54 coacts with two spaced apart stop elements 55, 56, arranged between the flanges 50, which limit the sliding motion of the sliding block 51. In this connection, the buffer 54 preferably functions as a sound absorber as well. The sliding block further carries a carrier member 57, extending in the top girder away from the bent upright (to the right in the drawing), this carrier member 57 in this example comprising a loop bent from wire. The carrier member 57 fulfills the same function as the carrier member 24 of Figs. 2 and 4A, and the carrier member 24' of Fig. 4B.

The locking arm 12 in this exemplary embodiment has a narrowed operating part 58 partly extending above the top surface of the operating section. The opening 59 in this example is slotted and is so narrow as to disallow the insertion of the fingers therethrough. This ensures safe operation.

Unintentional operation of the locking arm is prevented in that a raised edge 60 is provided around the opening 59 and the operating part 58 of the locking arm that extends through the opening.

The opening 59 is preferably formed, as shown, in a plastic insert 61, which is mounted in and/or over one or more openings 62 provided in the operating section for that purpose. The insert is preferably mounted by means of one or more projections or lugs, as shown at 63, through clamping action and/or by means of a snap connection.

In the example shown, the insert 61 at the same time constitutes the raised edge 60.

Further, with advantage, the insert may also form the cam 28 which cooperates with the carrier member 57, whose function corresponds with that of the member 26 of Fig. 4A and member 26' of Fig. 4B. The insert 61 again has a cam surface 64 which corresponds with the cam element 29 of Fig. 2.

If the operating section is shifted from the position shown in Fig. 8 to the left, the cam surface 64 causes the locking arm to tilt on the pivot 13, so that the locking arm releases the roller 53. The catch upright can then pivot to the bent upright 4, i.e. to the left in the drawing. If necessary, this can be effected manually or through the cam 28. If the catch upright has attained the position indicated at 6', the buffer 54 abuts against the stop 56. The sliding block and the carrier member 57 have then moved to the left as well.

The catch upright can be returned to the starting position again by an animal inserting its head into the eating opening 8, or by moving the operating section 18 to the right, whereby the cam 28, via the carrier member 57, pulls the sliding block 51, and thus the catch upright, to the right, until the buffer 54 abuts against the stop 56.

Further, the catch upright can, of course, be individually unlocked by pushing the part 58 of the locking arm 12 downwards.

In feeding racks of the type described, it may happen that the legs of an eating animal buckle and the animal can no longer retract its head from the eating opening, not even when the catch upright is unlocked. To obviate this problem, it is sometimes desirable that the catch upright can pivot from the vertical position both to the left and to the right.

An exemplary embodiment of a feeding rack according to the invention whose catch uprights can pivot in two directions from the catch position, is shown in Figs. 10 and 11. The second pivoting position is indicated at 6''. With such a feeding rack, the bent uprights should comprise at the lower end, too, a part that slants from the pivoting point to the adjacent fixed upright 3. Alternatively, the pivoting point can also be provided at the end of a support mounted on the adjacent fixed upright.

Fig. 10 again shows a sliding block 51 similar to that of Fig. 8. The buffer 54, however, has been omitted because it would prevent pivoting motion to the right. As a replacement, it is for instance possible to arrange a rubber buffer at the lower end of the catch upright.

The sliding block again comprises a cam 53, which in this example is designed as a roller adapted to coact with the lower end of a locking arm 12 pivotally mounted between the flanges 50 of the top section 1. All this is as described hereinabove.

In the embodiment of Figs. 10 and 11, however, the roller 53 coacts with a second locking arm 70, which may be identical to the locking arm 12, but which is located on the other side of the cam roller 53. The locking arm 70 has an operating part 71 which, similarly to the operating part 58 of the locking arm 12, extends through a narrow opening 72 above the top surface of the operating section. Along the opening, a raised edge is arranged again, which may be integral with the raised edge 60 provided at the opening 59.

Preferably, the openings 59 and 72 are formed in a plastic insert 73, in a manner similar to that shown in Figs. 8 and 9 for the opening 59.

When the operating section 18 is moved to the right (in Fig. 10), a cam face 74 of the insert contacts the operating part 71 of the locking arm 70, whereby the latter tilts and releases the cam roller 53. The sliding block and the catch upright can then move to the right as well, as indicated at 6''. Thus the head 11 of the catch upright can lift the locking arm 12 and pass it. Unlocking individual eating openings can, of course, be effected by operating the locking arm 70 manually.

To enable the catch upright to be pivoted back from the position indicated at 6'' into the vertical position, the locking arm 12 should be operated. This can be effected either by the cam surface 64 or manually.

To bring the catch upright from a pivoting position 6' or 6'' back into the catch position, again use can be made of a carrier member, for instance a bent-wire member of the type shown in Fig. 2 with associated operating cam(s) such as cam 28.

With regard to the operating lever shown in Fig. 2, it is further observed that it may also be designed differently, for instance as a lever adapted to pivot along the top girder over a sector of a circle about a point located under (or above) the top girder, and adapted to be arrested at a plurality of positions, for instance by means of spring-mounted balls or pins.

Further, one or more openings in the operating section may be covered by a flexible seal, wherein the operating part of a pivoting arm near such an opening is operable via said flexible seal.

## Claims

1. A self-closing feeding rack for cattle, comprising a top girder (1) substantially horizontal in the service position, a bottom girder (2) extending parallel to the top girder (1), and a plurality of fixed uprights (3,7) connecting the top and bottom girders with each other, there being further provided a plurality of catch uprights (6) adapted for pivotal motion between an open position and a catch position, which, together with a fixed upright (7), each form an eating opening (8), as well as locking means (12) for the catch uprights (6) and operating means (18) for the locking means, the operating means (18) comprising a slidable operating section, the locking means (12) being attached to one of the girders (1,2), which girder is designed as a hollow section girder provided with at least one longitudinal slot (10) via which the ends (11) of the catch uprights (6) proximal to the relevant section girder extend into the section girder for cooperation with the locking means, wherein the locking means (12) comprise a plurality of locking elements (12) pivotally connected to the hollow section girder (1) and extending at least partly outside the hollow section girder (1), **characterized in that** each locking element (12) extends at least partly outside the hollow section girder (1) on a side of the hollow section girder (1) that is not proximal to the eating opening (8), and in that the operating section (18) is a hollow section that encloses the parts of the locking elements (12) that extend outside the hollow section girder (1), in such a manner that the locking means are inaccessible to the cattle.

2. A self-closing feeding rack according to claim 1, **characterized in that** the operating section (18) is located on the side of the hollow section girder (1,2) remote from the eating opening (8).

3. A self-closing feeding rack according to claim 1 or 2, **characterized in that** the locking elements (12) are pivotally mounted on a pivot (13) which extends transversely to an opening (9) provided in the hollow section girder (1,2) at least at the location of each locking element (12) and which is bearing-mounted on opposite sides of the opening (9).

4. A self-closing feeding rack according to claim 3, **characterized in that** the pivot (13) is bearing-mounted in projections (23) provided on the hollow section girder (1,2) and extending outwardly, said projections being enclosed by the operating section (18).

5. A self-closing feeding rack according to claim 4, **characterized in that** the projections (23) are flanges extending in the longitudinal direction of the hollow section girder (1,2) at least at the location of each pivot (13).

6. A self-closing feeding rack according to any one of claims 3-5, **characterized in that** the pivot (13) has free ends extending beyond the bearing, said free ends retaining the operating section (18) through internal flanges (22) thereof, in such a manner that the operating section (18) can slide in the longitudinal direction of the section girder (1,2) but in the service position is substantially incapable of moving transversely to the longitudinal direction.

7. A self-closing feeding rack according to any one of claims 1-6, **characterized in that** the operating section (18) is arranged along the top of the top girder (1).

8. A self-closing feeding rack according to claim 7, **characterized in that** the top girder comprises two sections (1A,1B) substantially C-shaped in cross section, said sections being spaced apart with the open sides facing each other, thereby including an upper and a lower longitudinal slot (9,10), the upper end of the catch uprights (6) being movably accommodated between the C-shaped sections.

9. A self-closing feeding rack according to any one of the preceding claims, **characterized in that** the operating section (18) has a substantially U-shaped cross section whose open side is proximal to the hollow section girder (1,2).

10. A self-closing feeding rack according to any one of the preceding claims**, characterized in that** each locking element (12) comprises a locking arm capable of pivoting about the pivot (13), the pivot being in the middle area of the locking arm (12) and a first end (14) of the locking arm in a first position can be brought into contact with an end (11) of a catch upright (6) in the catch position, whereas the locking arm (12) in a second position is located outside the path followed by the catch upright (6) when moving from the free to the catch position vice versa, the operating section (18) being adapted to engage the second end (20) of the pivoting arm, which is remote from the first end (14) and forms an operating part (19;58), to bring the locking arm from the first position to the second position.

11. A self-closing feeding rack according to claim 10, **characterized in that** the locking arm (12) is movable into the first position under the influence of gravity.

12. A self-closing feeding rack according to claim 7 and claim 10 or 11**, characterized in that** the first end (14) of the or each locking arm (12) in the first position thereof, when abutting a catch upright (6), is located lower than the pivot (13) of the locking arm (12).

13. A self-closing feeding rack according to any one of claims 10-12, **characterized in that** the first end (14) of the arm (12) comprises a roller (15) rotatable on an axis (16) extending transversely to the plane of feeding rack.

14. A self-closing feeding rack according to claim 13, **characterized in that** at least the outer surface of the roller (15) consists of plastic.

15. A self-closing feeding rack according to any one of claims 10-14, **characterized in that** the operating section (18) is provided, at the top thereof at the location of the eating openings (8), with openings (21;59) via which in a first position of the operating section (18) each operating part (20;58) is movable by finger from the first position to the second position.

16. A self-closing feeding rack according to any one of claims 9-15, **characterized in that** the free longitudinal edges of the U-shaped operating section are bent inwardly, the longitudinal edges defining a slot through which the locking arms extend, the bent longitudinal edges forming flanges (22) abutting against the exterior of the top girder (1).

17. A self-closing feeding rack according to claim 16, **characterized in that** at least one pivot (13) has its ends extending into the proximity of oppositely located insides of the U-section (18), the operating section being movably guided in the longitudinal direction of the feeding rack by the flanges (22) and by the ends of the at least one pivot (13).

18. A self-closing feeding rack according to claim 17, **characterized in that** the flanges (22), in vertical direction, are received with a proper fit between the at least one pivot (13) and the top surface of the top girder (1).

19. A self-closing feeding rack according to claim 18, **characterized in that** each flange (22) comprises a plurality of recesses which, through sliding displacement of the operating section (18), can be brought into a position in alignment with the ends of the at least one pivot (13), in which position the operating section (18) is (de)mountable.

20. A self-closing feeding rack according to any one of the preceding claims, **characterized in that** the ends of the catch uprights (6) extending into the hollow section girder (1,2) are adapted to cooperate with a carrier member (24;24') movable within the section girder (1,2) in longitudinal direction, said carrier members comprising two stops (25,26;25',26') spaced apart in longitudinal direction, the end of the catch uprights (6) being permanently accommodated between the two stops, whilst the operating section (18) comprises carrier elements (28) for displacing the carrier members at least in the direction of the catch position in the longitudinal direction of the feeding rack.

21. A self-closing feeding rack according to claim 20, **characterized in that** the carrier member (24;24') is a wire structure formed through bending and accommodated within the top girder (1).

22. A self-closing feeding rack according to claim 20, **characterized in that** the carrier member (24;24') is made of plastic and is accommodated within the top girder (1), the upper end (11) of the corresponding catch upright (6) being kept spaced from the longitudinal edges of the at least one longitudinal slot (9) of the top girder (1) by the carrier member.

23. A self-closing feeding rack according to any one of claims 10-22, **characterized in that** the operating section (18), on the inside thereof at the location of each operating part (19;58), is provided with a cam element (29;37;64) which upon sliding displacement of the operating section (18) can engage the operating part (19 58) of the locking arm (12) so as to bring the locking arm into the second position.

24. A self-closing feeding rack according to claim 23, **characterized in that** the cam element (29;37;64) is slidably mounted, the cam element being adapted to be brought into an inoperative position in which the adjacent pivoting arm (12) is not operable through sliding displacement of the operating section (18).

25. A self-closing feeding rack according to any one of claims 15-24, **characterized in that** at least one of the openings (21;59) in the operating section (18) is covered by a flexible seal, the operating part (19;58) of the pivoting arm (12) being operable by means of the seal.

26. A self-closing feeding rack according to any one of the preceding claims, **characterized in that** the operating section (18) can be fixed in at least one position.

27. A self-closing feeding rack according to any one of claims 1-26, **characterized in that** plastic bearing means are provided between parts of the operating section (18) and the hollow section girder (1,2) that come into contact with each other.

28. A self-closing feeding rack according to any one of claims 5-27, **characterized in that** the flanges are part of an inverted U-shaped bearing element (40) which is mounted on the hollow section girder (1,2).

29. A self-closing feeding rack according to claim 28, **characterized in that** the bearing element (40) is made of plastic.

30. A self-closing feeding rack according to claim 29, **characterized in that** the bearing element has small feet (41) supporting the operating section (18).

31. A self-closing feeding rack according to any one of claims 1-9, **characterized in that** each catch upright (6), at the end (11) extending into the hollow section girder (1,2), is provided with a sliding block (51) which is arranged around the relevant end of the catch upright (6) and is slidable in the hollow section girder (1,2), said sliding block (51) comprising a cam element (53) for cooperation with at least one pivotable locking element (12,70).

32. A self-closing feeding rack according to claim 31, **characterized in that** the sliding block (51) is made of plastic.

33. A self-closing feeding rack according to claim 31 or 32, **characterized in that** the cam element (53) is a roller.

34. A self-closing feeding rack according to any one of claims 31-33, **characterized in that** the sliding block (51) comprises a buffer (54) adapted to cooperate with at least one stop (55,56) extending into the top girder (1), said stop marking the end of the path of travel of the associated catch upright (6).

35. A self-closing feeding rack according to any one of claims 31-34, **characterized in that** the pivoting locking elements in each case comprise a locking arm (12,70) having an obliquely downwardly extending part adapted for cooperation with the cam (53) element and an obliquely upwardly extending operating part (58,71) operable via an opening (59,72) in the top surface of the operating section (18) by hand or by sliding displacement of the operating section (18).

36. A self-closing feeding rack according to claim 35, **characterized in that** the operating part (58,71) extends through the opening (59,72) above the top surface of the operating section (18) and that an upright protective edge (60) is located along the opening.

37. A self-closing feeding rack according to claim 36, **characterized in that** the opening (59,72) is a narrow elongate opening and that the operating part (58,71) has a narrow form adapted thereto.

38. A self-closing feeding rack according to any one of claims 35-37, **characterized in that** the opening is formed in a plastic insert (61) which is fitted in or over at least one larger opening (62) of the operating section (18).

39. A self-closing feeding rack according to claim 38, **characterized in that** the insert has a cam (28) extending into the hollow section girder (1,2), said cam being adapted to cooperate with a carrier member (57).

40. A self-closing feeding rack according to claim 39, **characterized in that** the carrier member (57) is a member connected with the sliding block (51).

41. A self-closing feeding rack according to any one of the preceding claims, **characterized in that** the catch uprights (6) are capable of pivoting from the catch position in both directions in the plane of the feeding rack so as to form an opening adjacent to the top girder (1) or adjacent to the bottom girder (2), as desired for allowing the head of an animal to pass.

42. A self-closing feeding rack according to claim 41 and any one of claims 31-40, **characterized in that** in the catch position of a catch upright (6), a pivoting locking element (12,70) is mounted on opposite sides of the cam element (53) of the sliding block (51).

43. A self-closing feeding rack according to claim 42, **characterized in that** the two locking elements (12,70) extend from the cam element (53) obliquely upwards in opposite directions and have an operating part (51,71) at the upper end.

44. A self-closing feeding rack according to claim 43, **characterized in that** the operating parts (58,71) extend through openings (59,72) in a plastic insert (61) which is mounted on the operating section (18).

45. A self-closing feeding rack according to claim 44, **characterized in that** the insert (61) comprises cam faces (64,74) for operating the locking elements.

46. A self-closing feeding rack according to claim 44 or 45, **characterized in that** the openings (59,72) in the insert (61) are narrow openings along which extends an upright edge (60).

## Patentansprüche

1. Selbstschließendes Fütterungsgestell für Vieh, umfassend einen in der Betriebsposition im wesentlichen horizontalen oberen Träger (1), einen sich parallel zu dem oberen Träger (1) erstreckenden unteren Träger (2), und eine Mehrzahl von ortsfesten Stützen (3, 7), welche den oberen und unteren Träger miteinander verbinden, wobei weiter eine Mehrzahl von Verschlußstützen (6) vorgesehen ist, welche zur Drehbewegung zwischen einer offenen Position und einer Verschlußposition geeignet sind, welche zusammen mit einer ortsfesten Stütze (7) jede eine Freßöffnung (8) bilden, wie auch Verriegelungsmittel (12) für die Verschlußstützen (6) und Betätigungsmittel (18) für die Verriegelungsmittel, wobei die Betätigungsmittel (18) einen verschiebbaren Betätigungsabschnitt umfassen, wobei die Verriegelungsmittel (12) an einem der Träger (1, 2) angebracht sind, welcher Träger als ein hohler Abschnitts- bzw. Form- bzw. Profilträger ausgebildet ist, der mit wenigstens einem Längsschlitz (10) versehen ist, durch welchen sich die Enden (11) der Verschlußstützen (6), die dem relevanten Abschnitts- bzw. Form- bzw. Profilträger nächstgelegen sind, zum Zusammenwirken mit den Verriegelungsmitteln in den Abschnitts- bzw. Form- bzw. Profilträger erstrecken, worin die Verriegelungsmittel (12) eine Mehrzahl von Verriegelungselementen (12) umfassen, die drehbar mit dem hohlen Abschnitts- bzw. Form- bzw. Profilträger (1) verbunden sind und sich wenigstens teilweise außerhalb des hohlen Abschnitts- bzw. Form- bzw. Profilträgers (1) erstrecken, dadurch **gekennzeichnet,** daß sich jedes Verriegelungselement (12) wenigstens teilweise außerhalb des hohlen Abschnitts- bzw. Form- bzw. Profilträgers (1) auf einer Seite des hohlen Abschnitts- bzw. Form- bzw. Profilträgers (1), die der Freßöffnung (8) nicht nächstgelegen ist, erstreckt, und daß der Betätigungsabschnitt (18) ein hohles Profil bzw. ein hohler Abschnitt ist, das die Teile des Verriegelungselements (12), die sich außerhalb des hohlen Abschnitts- bzw. Form- bzw. Profilträgers (1) erstrecken, in einer solchen Art und Weise umschließt, daß die Verriegelungsmittel für das Vieh unzugänglich sind.

2. Selbstschließendes Fütterungsgestell gemäß Anspruch 1, dadurch **gekennzeichnet,** daß sich der Betätigungsabschnitt (18) auf der von der Freßöffnung (8) entfernten Seite des hohlen Abschnitts- bzw. Form- bzw. Profilträgers (1, 2) befindet.

3. Selbstschließendes Fütterungsgestell gemäß Anspruch 1 oder 2, dadurch **gekennzeichnet,** daß die Verriegelungselemente (12) drehbar auf einer Drehachse (13) angebracht sind, welche sich quer zu einer wenigstens an dem Ort von jedem Verriegelungselement (12) in dem hohlen Abschnitts- bzw. Form- bzw. Profilträger (1, 2) vorgesehenen Öffnung (9) erstreckt, und welche auf gegenüberliegenden Seiten der Öffnung (9) lagermontiert ist.

4. Selbstschließendes Fütterungsgestell gemaß Anspruch 3, dadurch **gekennzeichnet,** daß die Drehachse (13) in Vorsprüngen (23) lagermontiert ist, die auf bzw. an dem hohlen Abschnitts- bzw. Form- bzw. Profilträger (1, 2) vorgesehen sind und sich nach auswärts erstrecken, wobei die Vorsprünge durch den Betätigungsabschnitt (18) umschlossen sind.

5. Selbstschließendes Fütterungsgestell gemäß Anspruch 4, dadurch **gekennzeichnet,** daß die Vorsprünge (23) Flansche sind, die sich in der Längsrichtung des hohlen Abschnitts- bzw. Form- bzw. Profilträgers (1, 2) wenigstens an dem Ort von jeder Drehachse (13) erstrecken.

6. Selbstschließendes Fütterungsgestell gemäß irgendeinem der Ansprüche 3 bis 5, dadurch **gekennzeichnet,** daß die Drehachse (13) freie Enden hat, die sich jenseits des Lagers erstrecken, wobei die freien Enden den Betätigungsabschitt (18) durch innere Flansche (22) desselben in einer solchen Art und Weise zurückhalten, daß der Betätigungsabschnitt (18) in der Längsrichtung des Abschnitts- bzw. Form- bzw. Profilträgers (2) gleiten bzw. sich verschieben kann, aber in der Betriebsposition im wesentlichen unfähig ist, sich quer zu der Längsrichtung zu bewegen.

7. Selbstschließendes Fütterungsgestell gemäß irgendeinem der Ansprüche 1 bis 6, dadurch **gekennzeichnet,** daß der Betätigungsabschnitt (18) längs bzw. entlang der Oberseite des oberen Trägers (1) angeordnet ist.

8. Selbstschließendes Fütterungsgestell gemäß Anspruch 7, dadurch **gekennzeichnet,** daß der obere Träger (2) zwei im Querschnitt im wesentlichen C-förmige Abschnitte (1A, 1B) umfaßt, wobei die Abschnitte voneinander beabstandet sind, wobei die offenen Seiten einander zugewandt sind, so daß dadurch ein oberer und ein unterer Längsschlitz (9, 10) eingeschlossen werden, wobei das obere Ende der Verschlußstützen (6) bewegbar zwischen den C-förmigen Abschnitten aufgenommen ist.

9. Selbstschließendes Fütterungsgestell gemäß irgendeinem der vorhergehenden Ansprüche, dadurch **gekennzeichnet,** daß der Betätigungsabschnitt (18) einen im wesentlichen U-förmigen Querschnitt hat, dessen offene Seite dem hohlen Abschnitts- bzw. Form- bzw. Profilträger (1, 2) nächstgelegen ist.

10. Selbstschließendes Fütterungsgestell gemäß irgendeinem der vorhergehenden Ansprüche, dadurch **gekennzeichnet,** daß jedes Verriegelungselement (12) einen Verriegelungsarm umfaßt, der fähig ist, sich um die Drehachse (13) zu drehen, wobei die Drehachse in dem mittleren Bereich des Verriegelungsarms (12) ist und ein erstes Ende (14) des Verriegelungsarms in einer ersten Position in Kontakt mit einem Ende (11) einer Verschlußstütze (6) in der Verschlußposition gebracht werden kann, wohingegen sich der Verriegelungsarm (12) in einer zweiten Position außerhalb des Wegs befindet, dem die Verschlußstütze (6) folgt, wenn sie sich von der freien Position zu der Verschlußposition, sowie umgekehrt, bewegt, wobei der Betätigungsabschnitt (18) dazu geeignet ist, mit dem zweiten Ende (20) des sich drehenden Arms, welches von dem ersten Ende (14) entfernt ist und einen Betätigungsteil (19; 58) bildet, in Eingriff zu treten, um den Verriegelungsarm aus der ersten Position zu der zweiten Position zu bringen.

11. Selbstschließendes Fütterungsgestell gemäß Anspruch 10, dadurch **gekennzeichnet,** daß der Verriegelungsarm (12) unter dem Einfluß der Schwerkraft in die erste Position bewegbar ist.

12. Selbstschließendes Fütterungsgestell gemäß Anspruch 7 und Anspruch 10 oder 11, dadurch **gekennzeichnet,** daß das erste Ende (14) von dem oder jedem Verriegelungsarm (12) in der ersten Position desselben bzw. derselben, wenn es an einer Verschlußstütze (6) anliegt, niedriger als die Drehachse (13) des Verriegelungsarms (12) liegt.

13. Selbstschließendes Fütterungsgestell gemäß irgendeinem der Ansprüche 10 bis 12, dadurch **gekennzeichnet,** daß das erste Ende (14) des Arms (12) eine Rolle bzw. Walze (15) umfaßt, die auf einer Achse (16) drehbar ist, welche sich quer zu der Ebene des Fütterungsgestells erstreckt.

14. Selbstschließendes Fütterungsgestell gemäß Anspruch 13, dadurch **gekennzeichnet,** daß wenigstens die äußere Oberfläche der Rolle bzw. Walze (15) aus Kunststoff besteht.

15. Selbstschließendes Fütterungsgestell gemäß irgendeinem der Ansprüche 10 bis 14, dadurch **gekennzeichnet,** daß der Betätigungsabschnitt (18) an der Oberseite desselben an dem Ort der Freßöffnungen (8) mit Öffnungen (21; 29) versehen ist, durch welche in einer ersten Position des Betätigungsabschnitts (18) jeder Betätigungsteil (20; 58) mittels Finger von der ersten Position zu der zweiten Position bewegbar ist.

16. Selbstschließendes Fütterungsgestell gemäß irgendeinem der Ansprüche 9 bis 15, dadurch **gekennzeichnet,** daß die freien Längsränder des U-förmigen Betätigungsabschnitts nach einwärts gebogen sind, wobei die Längsränder einen Schlitz begrenzen, durch welchen sich die Verriegelungsarme erstrecken, wobei die gebogenen Längsränder Flansche (22) bilden, die gegen das Äußere des oberen Trägers (1) anliegen.

17. Selbstschließendes Fütterungsgestell gemäß Anspruch 16, dadurch **gekennzeichnet,** daß sich die Enden von wenigstens einer Drehachse (13) in die Nähe der gegenüberliegend befindlichen Innenseiten des U-Querschnitts (18) erstrecken, wobei der Betätigungsabschnitt in der Längsrichtung des Fütterungsgestells mittels der Flansche (22) und mittels der Enden der wenigstens einen Drehachse (13) bewegbar geführt ist.

18. Selbstschließendes Fütterungsgestell gemäß Anspruch 17, dadurch **gekennzeichnet,** daß die Flansche (22) in der Vertikalrichtung mit einem angemessenen Sitz zwischen wenigstens einer Drehachse (13) und der oberen Oberfläche des oberen Trägers (1) aufgenommen sind.

19. Selbstschließendes Fütterungsgestell gemäß Anspruch 18, dadurch **gekennzeichnet,** daß jeder Flansch (22) eine Mehrzahl von Vertiefungen bzw. Ausnehmungen umfaßt, welche durch Verschiebeverlagerung des Betätigungsabschnitts (18) in eine Fluchtungsposition mit den Enden der wenigstens einen Drehachse (13) gebracht werden können, in welcher Position der Betätigungsabschnitt (18) (de)montierbar ist.

20. Selbstschließendes Fütterungsgestell gemäß irgendeinem der vorhergehenden Ansprüche, dadurch **gekennzeichnet,** daß sich die Enden der Verschlußstützen (6), die sich in den hohlen Abschnitts- bzw. Form- bzw. Profilträger (1, 2) erstrecken, dazu geeignet sind, mit einem Trägerteil (24; 24') zusammenzuwirken, welches innerhalb des Abschnitts- bzw. Form- bzw. Profilträgers (1, 2) in der Längsrichtung bewegbar ist, wobei die Trägerteile zwei in der Längsrichtung beabstandete Anschläge (25, 26; 25', 26') umfassen, wobei das Ende der Verschlußstützen (6) permanent zwischen den beiden Anschlägen aufgenommen ist, während der Betätigungsabschnitt (18) Trägerelemente (28) zum Verlagern der Trägerteile wenigstens in der Richtung der Verschlußposition in der Längsrichtung des Fütterungsgestells umfaßt.

21. Selbstschließendes Fütterungsgestell gemäß Anspruch 20, dadurch **gekennzeichnet,** daß das Trägerteil (24, 24') eine durch Biegen ausgebildete und innerhalb des oberen Trägers (1) aufgenommene Drahtstruktur ist.

22. Selbstschließendes Fütterungsgestell gemäß Anspruch 20, dadurch **gekennzeichnet,** daß das Trägerteil (24, 24') aus Kunststoff hergestellt und innerhalb des oberen Trägers (1) aufgenommen ist, wobei das obere Ende (11) der entsprechenden Verschlußstütze (6) beabstandet von den Längsrändern des wenigstens einen Längsschlitzes (9) des oberen Trägers (1) mittels des Trägerteils gehalten wird.

23. Selbstschließendes Fütterungsgestell gemäß irgendeinem der Ansprüche 10 bis 22, dadurch **gekennzeichnet,** daß der Betätigungsabschnitt (18) auf der Innenseite desselben an dem Ort von jedem Betätigungsteil (19; 58) mit einem Nocken- bzw. Steuerkurvenelement (29; 37; 64) versehen ist, welches bei Verschiebeverlagerung des Betätigungsabschnitts (18) mit dem Betätigungsteil (19; 58) des Verriegelungsarms (12) so in Eingriff treten kann, daß der Verriegelungsarm in die zweite Position gebracht wird.

24. Selbstschließendes Fütterungsgestell gemäß Anspruch 23, dadurch **gekennzeichnet,** daß das Nocken- bzw. Steuerkurvenelement (29; 37; 64) verschiebbar montiert ist, wobei das Nocken- bzw. Steuerkurvenelement dazu geeignet ist, in eine inoperative Position gebracht zu werden, in welcher der benachbarte sich drehende Arm (12) nicht durch Verschiebeverlagerung des Betätigungsabschnitts (18) betätigbar ist.

25. Selbstschließendes Fütterungsgestell gemäß irgendeinem der Ansprüche 15 bis 24, dadurch **gekennzeichnet,** daß wenigstens eine der Öffnungen (21; 59) in dem Betätigungsabschnitt (18) von einer flexiblen Dichtung bedeckt ist, wobei der Betätigungsteil (19; 58) des sich drehenden Arms (12) mittels der Dichtung betätigbar ist.

26. Selbstschließendes Fütterungsgestell gemäß irgendeinem der vorhergehenden Ansprüche, dadurch **gekennzeichnet,** daß der Betätigungsabschnitt (18) in wenigstens einer Position fixiert werden kann.

27. Selbstschließendes Fütterungsgestell gemäß irgendeinem der Ansprüche 1 bis 26, dadurch **gekennzeichnet,** daß Kunststofflagermittel zwischen Teilen des Betätigungsabschnitts (18) und des hohlen Abschnitts- bzw. Form- bzw. Profilträgers (1, 2), die in Kontakt miteinander kommen, vorgesehen sind.

28. Selbstschließendes Fütterungsgestell gemäß irgendeinem der Ansprüche 5 bis 27, dadurch **gekennzeichnet,** daß die Flansche Teil eines umgekehrt U-förmigen Lagerelements (40) sind, welches auf bzw. in dem hohlen Abschnitts- bzw. Form- bzw. Profilträger (1, 2) angebracht ist.

29. Selbstschließendes Fütterungsgestell gemäß Anspruch 28, dadurch **gekennzeichnet,** daß das Lagerelement (40) aus Kunststoff hergestellt ist.

30. Selbstschließendes Fütterungsgestell gemäß Anspruch 29, dadurch **gekennzeichnet,** daß das Lagerelement kleine bzw. schmale bzw. dünne Füße (41) hat, welche den Betätigungsabschnitt (18) tragen bzw. halten bzw. abstutzen.

31. Selbstschließendes Fütterungsgestell gemäß irgendeinem der Ansprüche 1 bis 9, dadurch **gekennzeichnet,** daß jede Verschlußstütze (6) an dem Ende (11), welches sich in den hohlen Abschnitts- bzw. Form- bzw. Profilträger (1, 2) erstreckt, mit einem Verschiebe- bzw. Gleitblock (51) versehen ist, welcher um das relevante Ende der Verschlußstütze (6) angeordnet und in dem hohlen Abschnitts- bzw. Form- bzw. Profilträger (1, 2) verschiebbar ist, wobei der Verschiebe- bzw. Gleitblock (51) ein Nocken- bzw. Steuerkurvenelement (53) zum Zusammenwirken mit wenigstens einem drehbaren Verriegelungselement (12, 70) umfaßt.

32. Selbstschließendes Fütterungsgestell gemäß Anspruch 31, dadurch **gekennzeichnet,** daß der Verschiebe- bzw. Gleitblock (51) aus Kunststoff hergestellt ist.

33. Selbstschließendes Fütterungsgestell gemäß Anspruch 31 oder 32, dadurch **gekennzeichnet,** daß das Nocken- bzw. Steuerkurvenelement (53) eine Rolle bzw. Walze ist.

34. Selbstschließendes Fütterungsgestell gemäß irgendeinem der Ansprüche 31 bis 33, dadurch **gekennzeichnet,** daß der Verschiebe- bzw. Gleitblock (51) einen Puffer (54) umfaßt, der dazu geeignet ist, mit wenigstens einem Anschlag (55, 56) zusammenzuwirken, welcher sich in den oberen Träger (1) erstreckt, wobei der Anschlag das Ende des Laufwegs der zugeordneten Verschlußstütze (6) markiert.

35. Selbstschließendes Fütterungsgestell gemäß irgendeinem der Ansprüche 31 bis 34, dadurch **gekennzeichnet,** daß die sich drehenden Verriegelungselemente in jedem Falle einen Verriegelungsarm (12, 70) umfassen, der einen sich schräg nach abwärts erstreckenden Teil hat, welcher zum Zusammenwirken mit dem Nocken- bzw. Steuerkurvenelement (53) geeignet ist, und einen sich schräg nach aufwärts erstreckenden Betätigungsteil (58, 71), der durch eine Öffnung (59, 72) in der oberen Oberfläche des Betätigungsabschnitts (18) von Hand oder durch Verschiebeverlagerung des Betätigungsabschnitts (18) betätigbar ist.

36. Selbstschließendes Fütterungsgestell gemäß Anspruch 35, dadurch **gekennzeichnet,** daß sich der Betätigungsteil (58, 71) durch die Öffnung (59, 72) über der oberen Oberfläche des Betätigungsabschnitts (18) erstreckt, und daß sich eine aufrechte Schutzkante bzw. ein aufrechter Schutzrand (60) längs der Öffnung befindet.

37. Selbstschließendes Fütterungsgestell gemäß Anspruch 36, dadurch **gekennzeichnet,** daß die Öffnung (59, 72) eine schmale langgestreckte Öffnung ist, und daß der Betätigungsteil (58, 71) eine daran angepaßte schmale Form hat.

38. Selbstschließendes Fütterungsgestell gemäß irgendeinem der Ansprüche 35 bis 37, dadurch **gekennzeichnet,** daß die Öffnung in einem Kunststoffeinsatz (61) ausgebildet ist, welcher in oder über wenigstens einer größeren Öffnung (62) des Betätigungsabschnitts (18) angebracht ist.

39. Selbstschließendes Fütterungsgestell gemäß Anspruch 38, dadurch **gekennzeichnet,** daß der Einsatz eine Nocke bzw. Steuerkurve (28) hat, die sich in den hohlen Abschnitts- bzw. Form- bzw. Profilträger (1, 2) erstreckt, wobei die Nocke bzw. Steuerkurve dazu geeignet ist, mit einem Trägerteil (57) zusammenzuwirken.

40. Selbstschließendes Fütterungsgestell gemäß Anspruch 39, dadurch **gekennzeichnet,** daß das Trägerteil (57) ein mit dem Verschiebe- bzw. Gleitblock (51) verbundenes Teil ist.

41. Selbstschließendes Fütterungsgestell gemäß irgendeinem der vorhergehenden Ansprüche, dadurch **gekennzeichnet,** daß die Verschlußstützen (6) fähig sind, sich aus der Verschlußposition in beiden Richtungen in der Ebene des Fütterungsgestells so zu verdrehen, daß sie eine Öffnung benachbart dem oberen Träger (1) oder benachbart dem unteren Träger (2) bilden, wie sie zum Ermöglichen, daß der Kopf eines Tiers hindurchgeht, gewünscht wird.

42. Selbstschließendes Fütterungsgestell gemäß Anspruch 41 und irgendeinem der Ansprüche 31 bis 40, dadurch **gekennzeichnet,** daß in der Verschlußposition einer Verschlußstütze (6) ein sich verdrehendes Verriegelungselement (12, 70) auf entgegengesetzten Seiten des Nocken- bzw. Steuerkurvenelements (53) des Verschiebe- bzw. Gleitblocks (51) angebracht ist.

43. Selbstschließendes Fütterungsgestell gemäß Anspruch 42, dadurch **gekennzeichnet,** daß sich die beiden Verriegelungselemente (12, 70) von dem Nocken- bzw. Steuerkurvenelement (53) schräg nach aufwärts in entgegensetzten Richtungen erstrecken und einen Betätigungsteil (51, 71) an dem oberen Ende haben.

44. Selbstschließendes Fütterungsgestell gemäß Anspruch 43, dadurch **gekennzeichnet,** daß sich die Betätigungsteile (58, 71) durch Öffnungen (59, 72) in einem Kunststoffeinsatz (61) erstrecken, welcher auf bzw. in dem Betätigungsabschnitt (18) angebracht ist.

45. Selbstschließendes Fütterungsgestell gemäß Anspruch 44, dadurch **gekennzeichnet,** daß der Einsatz (61) Nocken- bzw. Steuerkurvenflächen (64, 74) zum Betätigen der Verriegelungselemente umfaßt.

46. Selbstschließendes Fütterungsgestell gemäß Anspruch 44 oder 45, dadurch **gekennzeichnet,** daß die Öffnungen (59, 72) in dem Einsatz (61) schmale Öffnungen sind, längs welchen sich eine aufrechte Kante bzw. ein aufrechter Rand (60) erstreckt.

## Revendications

1. Cornadis à fermeture automatique pour bétail comprenant une poutre supérieure (1) essentiellement horizontale en position de service, une poutre inférieure (2) s'étendant parallèlement à la poutre supérieure (1) et plusieurs colonnes fixes (3,7) reliant les poutres supérieure et inférieure l'une à l'autre, plusieurs colonnes d'entravement (6) destinées à un mouvement de pivotement entre une position ouverte et une position d'entravement qui, avec une colonne fixe (7) formant chacune une ouverture pour manger (8) ainsi que des moyens de verrouillage (12) pour les colonnes d'entravement (6) et des moyens d'actionnement (18) pour les moyens de verrouillage, les moyens d'actionnement (18) comprenant une section d'actionnement coulissante et les moyens de verrouillage (12) étant fixés à une des poutres (1,2), laquelle poutre est conçue comme une poutre à section creuse et dotée d'au moins une fente longitudinale (10) par laquelle les extrémités (11) des colonnes d'entravement (6) proximales à la poutre de section correspondante s'étendent dans la poutre de section pour concourir avec les moyens de verrouillage, dans lequel les moyens de verrouillage (12) comprennent plusieurs éléments de verrouillage (12) fixés à pivotement à la poutre à section creuse (1) et s'étendant du moins en partie à l'extérieur de la poutre à section creuse (1), caractérisé en ce que chaque élément de verrouillage (12) s'étend du moins en partie à l'extérieur de la poutre à section creuse (1) d'un côté de la poutre à section creuse (1) qui n'est pas proximale à l'ouverture pour manger (8) et en ce que la section d'actionnement (18) est une section creuse qui renferme les parties des éléments de verrouillage (12) qui s'étendent à l'extérieur de la poutre à section creuse (1) de telle manière que les moyens de verrouillage soient inaccessibles au bétail.

2. Cornadis à fermeture automatique selon la revendication 1, caractérisé en ce que la section d'actionnement (18) est située sur le côté de la poutre à section creuse (1, 2) à distance de l'ouverture pour manger (8).

3. Cornadis à fermeture automatique selon la revendication 1 ou 2, caractérisé en ce que les éléments de verrouillage (12) sont fixés à pivotement sur un pivot (13) qui s'étend transversalement à une ouverture (9) prévue dans la poutre à section creuse (1,2) du moins à hauteur de l'emplacement de chaque élément de verrouillage (12) et qui est monté sur palier sur les côtés opposés de l'ouverture (9).

4. Cornadis à fermeture automatique selon la revendication 3, caractérisé en ce que le pivot (13) est monté sur palier dans des saillies (23) prévues sur la poutre à section creuse (1, 2) et s'étendant vers l'extérieur, lesdites saillies étant renfermées par la section d'actionnement (18).

5. Cornadis à fermeture automatique selon la revendication 4, caractérisé en ce que les saillies (23) sont des brides s'étendant dans la direction longitudinale de la poutre à section creuse (1, 2) du moins à hauteur de l'emplacement de chaque pivot (13).

6. Cornadis à fermeture automatique selon l'une quelconque des revendications 3 à 5, caractérisé en ce que le pivot (13) possède des extrémités libres au-delà du support, lesdites extrémités libres retenant la section d'actionnement (18) à travers les brides internes (22) de celle-ci de telle manière que la section d'actionnement (18) puisse coulisser dans la direction longitudinale de la poutre à section creuse (1, 2) mais soit essentiellement incapable de se déplacer transversalement à la direction longitudinale en position de service.

7. Cornadis à fermeture automatique selon l'une quelconque des revendications 1 à 6, caractérisé en ce que la section d'actionnement (18) est disposée au-dessus de la poutre supérieure (1).

8. Cornadis à fermeture automatique selon la revendication 7, caractérisé en ce que la poutre supérieure se compose de deux sections (1A, 1B) essentiellement en forme de C en coupe transversale, lesdites sections étant espacées, les faces ouvertes se faisant face, comprenant des fentes longitudinales supérieure et inférieure (9, 10), l'extrémité supérieure des commandes d'entravement (6) étant logée de manière mobile entre les sections en forme C.

9. Cornadis à fermeture automatique selon l'une quelconque des revendications précédentes, caractérisé en ce que la section d'actionnement (18) possède essentiellement une coupe transversale en forme de U dont la face ouverte est proximale à la poutre à section creuse (1, 2).

10. Cornadis à fermeture automatique selon l'une quelconque des revendications précédentes, caractérisé en ce que chaque élément de verrouillage (12) comprend un bras de verrouillage capable de pivoter autour du pivot (13), le pivot se trouvant dans la région centrale du bras de verrouillage (12) et une première extrémité (14) du bras de verrouillage dans une première position peut être amené en contact avec une extrémité (11) d'une colonne d'entravement (6) dans la position d'entravement tandis que le bras de verrouillage (12) dans une deuxième position est situé à l'extérieur du trajet suivi par la colonne d'entravement (6) lorsqu'elle se déplace de la position libre à la position entravée et inversement, la section d'actionnement (18) étant destinée à recevoir la deuxième extrémité (20) du bras pivotant qui est éloignée de la première extrémité (14) et forme une partie d'actionnement (19, 58) pour amener le bras de verrouillage de la première position vers la deuxième position.

11. Cornadis à fermeture automatique selon la revendication 10, caractérisé en ce que le bras de verrouillage (12) est mobile dans la première position sous l'influence de la gravité.

12. cornadis à fermeture automatique selon la revendication 7 et la revendication 10 ou 11, caractérisé en ce que la première extrémité (14) du ou de chaque bras de verrouillage (12) dans la première position de celui-ci, lorsqu'il aboute une colonne d'entravement (6), est située plus bas que le pivot (13) du bras de verrouillage (12).

13. Cornadis à fermeture automatique selon l'une quelconque des revendications 10 à 12, caractérisé en ce que la première extrémité (14) du bras (12) se compose d'un rouleau (15) qui peut tourner sur un axe (16) s'étendant transversalement par rapport au plan du cornadis.

14. Cornadis à fermeture automatique selon la revendication 13, caractérisé en ce qu'au moins la surface externe du rouleau (15) se compose d'un plastique.

15. Cornadis à fermeture automatique selon l'une quelconque des revendications 10 à 14, caractérisé en ce que la section d'actionnement (18) est dotée au-dessus de celle-ci à hauteur de l'emplacement des ouvertures pour manger (8) d'ouvertures (21, 59) par lesquelles chaque partie d'actionnement (20, 58) peut être déplacée par un doigt de la première position vers la deuxième position dans une première position de la section d'actionnement (18).

16. Cornadis à fermeture automatique selon l'une quelconque des revendications 9 à 15, caractérisé en ce que les bords longitudinaux libres de la section d'actionnement en forme de U sont courbés vers l'intérieur, les bords longitudinaux définissant une fente à travers laquelle les bras de verrouillage s'étendent, les bords longitudinaux courbés formant des brides (22) aboutant l'extérieur de la poutre supérieure (1).

17. Cornadis à fermeture automatique selon la revendication 16, caractérisé en ce qu'au moins un pivot (13) possède ses extrémités s'étendant à proximité d'intérieurs opposés de la section en U (18), la section d'actionnement étant guidée de manière mobile dans la direction longitudinale du cornadis par les brides (22) et par les extrémités d'au moins un pivot (13).

18. Cornadis à fermeture automatique selon la revendication 17, caractérisé en ce que les brides (22), en direction verticale sont logées par un joint approprié entre au moins un pivot (13) et la surface supérieure de la poutre supérieure (1).

19. Cornadis à fermeture automatique selon la revendication 18, caractérisé en ce que chaque bride (22) se compose de plusieurs cavités qui, par le coulissement de la section d'actionnement (18) peuvent être amenées dans une position alignée aux extrémités d'au moins un pivot (13), position dans laquelle la section d'actionnement (18) est (dé)montable.

20. Cornadis à fermeture automatique selon l'une quelconque des revendications précédentes, caractérisé en ce que les extrémités des colonnes d'entravement (6) s'étendant dans la poutre à section creuse (1, 2) sont destinées à concourir avec un élément de support (24, 24') mobile à l'intérieur de la poutre à section creuse (1, 2) dans une direction longitudinale, lesdits éléments de support comprenant deux arrêts (25, 26, 25', 26) espacés en direction longitudinale, l'extrémité des colonnes d'entravement (6) étant logée en permanence entre les deux arrêts tandis que la section d'actionnement (18) se compose d'éléments de support (28) pour déplacer les éléments de support du moins dans la direction de la position d'entravement en direction longitudinale du cornadis.

21. Cornadis à fermeture automatique selon la revendication 20, caractérisé en ce que l'élément de support (24, 24') est une structure en cable formée par flexion et logée dans la poutre supérieure (1).

22. Cornadis à fermeture automatique selon la revendication 20, caractérisé en ce que l'élément de support (24, 24') est composé de plastique et est logé dans la poutre supérieure (1), l'extrémité supérieure (11) de la colonne d'entravement correspondante (6) étant espacée des bords longitudinaux d'au moins une fente longitudinale (9) de la poutre supérieure (1) par l'élément de support.

23. Cornadis à fermeture automatique selon l'une quelconque des revendications 10 à 22, caractérisé en ce que la section d'actionnement 18 à l'intérieur de laquelle, à hauteur de chaque partie d'actionnement (19, 58) est prévu un élément à came (29, 37, 64) qui, lors du coulissement de la section d'actionnement (18), peut loger la partie d'actionnement (19, 58) du bras de verrouillage (12) de manière à amener le bras de verrouillage dans la deuxième position.

24. Cornadis à fermeture automatique selon la revendication 23, caractérisé en ce que l'élément à came (29, 37, 64) est monté à coulissement, l'élément à came étant destiné à être amené dans une position non opérationnelle dans laquelle le bras pivotant adjacent (12) ne peut fonctionner par le coulissement de la section d'actionnement (18).

25. Cornadis à fermeture automatique selon l'une quelconque des revendications 15 à 24, caractérisé en ce qu'au moins une des ouvertures (21, 59) dans la section d'actionnement (18) est recouverte par un joint flexible, la partie d'actionnement (19, 58) du bras pivotant (12) pouvant fonctionner au moyen du joint d'étanchéité.

26. Cornadis à fermeture automatique selon l'une quelconque des revendications précédentes, caractérisé en ce que la section d'actionnement (18) peut être fixée dans au moins une position.

27. Cornadis à fermeture automatique selon l'une quelconque des revendications 1 à 26, caractérisé en ce que des moyens de support en plastique sont prévus entre des parties de la section d'actionnement (18) et la poutre à section creuse (1, 2) qui entrent en contact l'un avec l'autre.

28. Cornadis à fermeture automatique selon l'une quelconque des revendications 5 à 27, caractérisé en ce que les brides font partie d'un élément de support en forme U inversé (40) qui est fixé sur la poutre à section creuse (1, 2).

29. Cornadis à fermeture automatique selon la revendication 28, caractérisé en ce que l'élément de support (40) est en plastique.

30. Cornadis à fermeture automatique selon la revendication 29, caractérisé en ce que l'élément de support possède de petits pieds (41) soutenant la section d'actionnement (18).

31. Cornadis à fermeture automatique selon l'une quelconque des revendications 1 à 9, caractérisé en ce que chaque colonne d'entravement (6), à hauteur de l'extrémité (11) s'étendant dans la poutre à section creuse (1, 2), est dotée d'un bloc coulissant (51) qui est disposé autour de l'extrémité correspondante de la colonne d'entravement (6) et peut coulisser dans la poutre à section creuse (1, 2), ledit bloc coulissant (51) comprenant un élément à came (53) destiné à concourir avec au moins un élément de verrouillage pivotant (12, 70).

32. Cornadis à fermeture automatique selon la revendication 31, caractérisé en ce que le bloc coulissant (51) est en plastique.

33. Cornadis à fermeture automatique selon la revendication 31, ou 32, caractérisé en ce que l'élément à came (53) est un rouleau.

34. Cornadis à fermeture automatique selon l'une quelconque des revendications 31 à 33, caractérisé en ce que le bloc coulissant (51) comprend un butoir (54) destiné à coopérer avec au moins un arrêt (55, 56) s'étendant dans la poutre supérieure (1), ledit arrêt marquant l'extrémité de la course de la colonne d'entravement correspondante (6).

35. Cornadis à fermeture automatique selon l'une quelconque des revendications 31 à 34, caractérisé en ce que les éléments de verrouillage pivotants comprennent dans chaque cas un bras de verrouillage (12, 70) possédant une partie s'étendant obliquement vers le bas destinée à coopérer avec l'élément à came (53) et une partie d'actionnement s'étendant obliquement vers le haut (58, 71) actionnable par une ouverture (59, 72) dans la surface supérieure de la section d'actionnement (18) à la main ou par coulissement de la section d'actionnement (18).

36. Cornadis à fermeture automatique selon la revendication 35, caractérisé en ce que la partie d'actionnement (58, 71) s'étend à travers l'ouverture (59, 72) au-dessus de la surface supérieure de la section d'actionnement (18) et en ce qu'un bord protecteur vertical (60) est situé le long de l'ouverture.

37. Cornadis à fermeture automatique selon la revendication 36, caractérisé en ce que l'ouverture (59, 72) est une ouverture allongée étroite et en ce que la partie d'actionnement (58, 71) possède une forme étroite adaptée à celle-ci.

38. Cornadis à fermeture automatique selon l'une quelconque des revendications 35 à 37, caractérisé en ce que l'ouverture est formée dans un insert en plastique (61) qui est logé dans ou sur au moins une ouverture plus grande (62) de la section d'actionnement (18).

39. Cornadis à fermeture automatique selon la revendication 38, caractérisé en ce que l'insert possède une came (28) s'étendant dans la poutre à section creuse (1, 2), ladite came étant destinée à concourir avec un élément de support (57).

40. Cornadis à fermeture automatique selon la revendication 39, caractérisé en ce que le moyen de support (57) est un élément raccordé au bloc coulissant (51).

41. Cornadis à fermeture automatique selon l'une quelconque des revendications précédentes, caractérisé en ce que les colonnes d'entravement (6) sont capables de pivoter depuis la position d'entravement dans les deux directions dans le plan du cornadis de manière à former une ouverture adjacente à la poutre supérieure (1) ou adjacente à la poutre inférieure (2) pour permettre à un animal de passer la tête.

42. Cornadis à fermeture automatique selon la revendication 41 et l'une quelconque des revendications 31 à 40, caractérisé en ce que, dans la position d'entravement d'une colonne d'entravement (6), un élément de verrouillage pivotant (12, 70) est monté sur les côtés opposés de l'élément à came (53) du bloc coulissant (51).

43. Cornadis à fermeture automatique selon la revendication 42, caractérisé en ce que les deux éléments de verrouillage (12, 70) s'étendent depuis l'élément à came (53) obliquement vers le haut dans les directions opposées et possèdent une partie d'actionnement (51, 71) à hauteur de l'extrémité supérieure.

44. Cornadis à fermeture automatique selon la revendication 43, caractérisé en ce que les parties d'actionnement (58, 71) s'étendent à travers les ouvertures (59, 72) dans un insert en plastique (61) qui est monté sur la section d'actionnement (18).

45. Cornadis à fermeture automatique selon la revendication 44, caractérisé en ce que l'insert (61) se compose de faces de came (64, 74) pour actionner les éléments de verrouillage.

46. Cornadis à fermeture automatique selon la revendication 44 ou 45, caractérisé en ce que les ouvertures (59, 72) dans l'insert (61) sont des ouvertures étroites le long desquelles s'étend un bord vertical (60).
